# EUROPEAN PATENT SPECIFICATION

(11) **EP 2 754 889 B1**
(45) Date of publication and mention of the grant of the patent: **16.11.2016**
(21) Application number: 14150411.8
(22) Date of filing: 08.01.2014
(51) Int. Cl.: F03D 7/02, H02P 9/10

(54) **Method and controller for damping vibrations in a wind power system**
Verfahren und Steuergerät zur Dämpfung von Schwingungen einer Windkraftanlage
Procédé et appareil de commande d'amortissement de vibrations pour une éolienne

(30) Priority: 15.01.2013 EP 13151259
(43) Date of publication of application: 16.07.2014
(73) Proprietor: ABB Schweiz AG, 5400 Baden (CH)
(72) Inventor: Peretti, Luca, 722 17 Västerås (SE)
(74) Representative: Savela, Reino Aleksi

(56) References cited:
- EP-A1- 1 944 667
- US-A1- 2007 176 428
- US-A1- 2011 204 636
- US-B1- 6 525 518
- US-B2- 7 423 352
- ANCA D. HANSEN ET AL: "Modelling and control of variable-speed multi-pole permanent magnet synchronous generator wind turbine", WIND ENERGY, vol. 11, no. 5, 1 September 2008 (2008-09-01), pages 537-554, XP055039493, ISSN: 1095-4244, DOI: 10.1002/we.278

## Description

### Technical Field

The present invention relates to a method and a controller for damping vibrations in a wind power system.

### Background

In a typical wind power system, a turbine arranged on a tower structure transforms wind energy into a torque of a rotating shaft. The mechanical energy on the shaft is transformed into electrical energy by means of a generator. The electrical energy from the generator is fed to a power transmission grid by means of a frequency converter, also called AC/AC converter, which adapts the frequency of the AC power to the frequency of the AC power transmission grid.

US 7,423,352 B2 ('352) illustrates such a wind power plant. '352 discuss damping of vibration in the mechanical components, referred to as the drive train, between the wind and the generator. The drive train includes for example (see '352 column 1 "Background") turbine blades, a low speed shaft connected to a gear box (44 in '352) providing an output to a high speed shaft leading to a generator (50 in '352). Due to torque oscillations the drive train is subjected to mechanical stress that leads to wear in its mechanical components. '352 provides a method for counteracting such wear by damping the vibrations in the drive train. The background section of '352 refer to prior methods for damping vibrations wherein the generator speed is input for the purpose of counteracting harmonics. However, such methods may not be reliable since it is difficult to estimate resonance frequencies of the drive train. To improve the methods of damping, '352 (see '352 "Detailed description") provides a method wherein a vibration damping system (38 in '352) is used for damping harmonics of the drive train and for damping harmonics from the side-to-side oscillations of the turbine tower. The vibration damping system (38 in '352, column 3, line 37-40 of '352) controls the torque of the so called generator portion (34 in '352) to reduce vibrations in the drive train (36 in '352) and the tower (18 in '352). The generator portion of '352 (34 in '352) also comprises a frequency converter (54 in '352). The torque of the generator (50 in '352) of the generator portion (34 in '352) is controlled by means of the frequency converter (54 in '352, see column 3, lines 60-67 of '352).

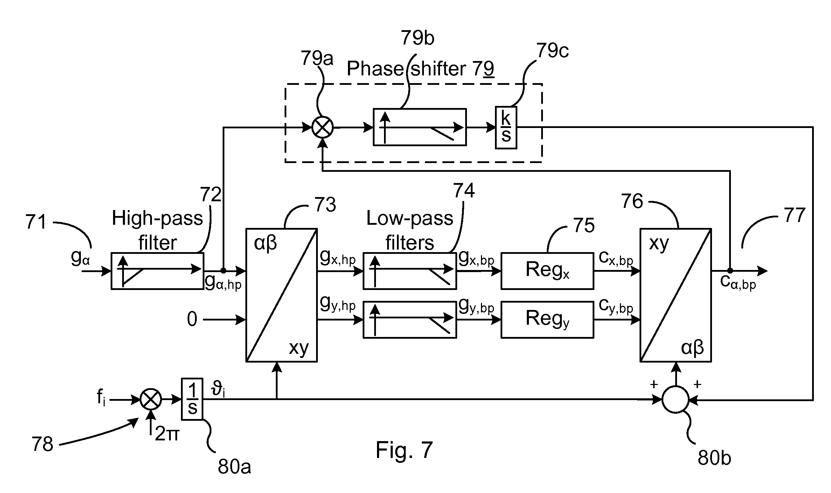

The vibration damping system (38 in '352) of '352 includes a controller (60 in '352) and a sensor (64 in '352) for providing the speed of the generator shaft (46 in '352). It also includes an accelerometer (75 in '352) responsive to oscillations of the tower (column 5, line 11-17 of '352). The vibration damping system (38 in '352, column 4, lines 25-37 of '352) controls the generator torque to reduce vibrations in the wind power system. The vibration damping system (38 in '352) identifies vibration frequencies based on changes of the speed of the generator shaft and modulates a control signal for the frequency converter (54 in '352) to produce the generator torque. For damping vibrations, the vibration damping system (38 in '352) identifies the resonant frequency of the tower and the resonant frequency of the drive train (column 6, lines 25-30 of '352) and may also identify the blade pass frequency of the blades of the wind turbine (column 6, lines 49-53 of '352). The identification of these frequencies is provided by identifying a peak value for each of the resonant frequencies of the tower and drive train (see claim 1 of '352), and possibly also the blade pass frequency (claim 2 of '352). Each resonance frequency is, for example, determined by means of a Fourier transform based on a peak detection algorithm (column 8, line 4-6 of '352). The analysis is based on prior knowledge of the frequency region where the resonant peak is likely to occur (column 8, line 16-18 of '352). The vibration damping system (38 in '352) identifies the highest peak in the predetermined frequency region, and determines that the frequency at the highest peak is a resonant frequency (column 8, line 28-29 of '352). By this peak detection algorithm, the three harmful frequencies, tower resonant frequency (ω_{T} in '352), the drive train resonant frequency (ω_{DT} in '352), and the blade pass frequency (ω_{P} in '352), are identified (see fig. 7 of '352), and subsequently counteracted by modulating the generator demand torque (see claim 13 of '352).

The method of '352is dependent of input from the vibration sensor (64 in '352) for identifying drive train resonance frequency and the blade pass frequency, and is dependent on input from the accelerometer (75 in '352) for identifying the tower oscillation resonance. The method of '352 is also dependent on prior knowledge of the resonant frequencies for identifying the frequency ranges to search.

Anca D. Hansen et al.: "Modelling and Control of Variable speed Multi-pole Permanent Magnet Synchronous Generator Wind Turbine", WIND ENERGY, vol. 11, no. 5, 1 September 2008, pages 537-554, XP055039493, ISSN: 1095-4244, DOI: 10.1002/we.278 describe variable-speed pitch-controlled wind turbines with mufti-pole permanent magnet synchronous generator (PMSG) and their extremely soft drive-train shafts. A model and a control strategy for a full back-to-back converter wind turbine with multi-pole PMSG are described. The model comprises sub models of the aerodynamic rotor, the drive-train by a two-mass model, the permanent magnet generator and the full-scale converter system. The control strategy, which embraces both the wind turbine control itself and the control of the full-scale converter, has tasks to control independently the active and reactive powers, to assist the power system and to ensure a stable normal operation of the wind turbine itself. A multi-pole PMSG connected to the grid through a full-scale converter has no inherent damping, and therefore, such configuration can become practically unstable, if no damping by means of external measures is applied. In this article, the frequency converter is designed to damp actively the drive-train oscillations, thus ensuring stable operation. The dynamic performance of the presented model and control strategy is assessed and emphasized in normal operation conditions by means of simulations.

### Summary

It is an objective to at least alleviate a problem in the prior art in respect to vibrations during wind power production.

For this purpose it is proposed a method and a controller for damping vibrations wind power system as claimed in the appended claims.

In one aspect of the invention, there is provided a method for damping vibrations in a wind power system comprising a wind turbine, a generator, and a frequency converter arranged to control the torque of the generator. The method comprises the steps of: (i) obtaining a signal of at least one entity as measured in the wind power system, the entity being affected by vibrations in the wind power system, (ii) performing a frequency analysis of the obtained signal, (iii) identifying unwanted frequency components of the obtained signal having amplitudes above predefined respective thresholds, and (iv) compensating for the unwanted frequency components by adjusting the torque of the generator at the frequencies of the unwanted frequency components. The compensating for each of the unwanted frequency components comprises: inputting into a compensating unit the obtained signal and the frequency of the unwanted frequency component, determining an output signal based on the obtained signal and the frequency of the unwanted frequency component, measuring the phase shift between the output signal and the obtained signal, modifying the output signal based on the measured phase shift between the output signal and the obtained signal to compensate for the measured phase shift, and using the output signal for adjusting the torque of the generator. The method may be performed by the frequency converter.

The step of determining an output signal comprises high-pass filtering the obtained signal by a high-pass filter, transforming the filtered signal by a Park transformation unit, low-pass filtering the transformed signal by a low-pass filter, regulating the low-pass filtered signal by a regulator, and transforming back the regulated signal by an inverse Park transformation unit, and wherein the frequency of the unwanted frequency component is integrated and input to the Park transformation unit and the inverse Park transformation unit.

In a second aspect of the invention, there is provided a controller for damping vibrations in a wind power system comprising a wind turbine, a generator, and a frequency converter arranged to control the torque of the generator. The controller comprises an input configured to obtain a signal of at least one entity as measured in the wind power system, the entity being affected by vibrations in the wind power system, a frequency analyser configured to perform a frequency analysis of the obtained signal, an identifier configured to identify unwanted frequency components of the obtained signal having amplitudes above predefined respective thresholds, and a compensator configured to compensate for the unwanted frequency components by adjusting the torque of the generator at the frequencies of the unwanted frequency components. The compensator comprises compensating units, wherein each of the compensating units is configured to compensate for a respective one of the unwanted frequency components, and comprises a compensating unit input configured to receive the obtained signal and the frequency of the unwanted frequency component, an analyser configured to determine an output signal based on the obtained signal and the frequency of the unwanted frequency component a phase shifter configured to measure the phase shift between the output signal and the obtained signal and to provide a phase advancement signal, wherein the analyser is configured to modify the output signal based on the phase advancement signal, and an output operatively connected to the generator configured to output the output signal for adjusting the torque of the generator. The controller may be implemented in a frequency converter.

The analyser of each compensating unit comprises a high-pass filter for high-pass filtering the obtained signal, a Park transformation unit for transforming the filtered signal, a low-pass filter for low-pass filtering the transformed signal, a regulator for regulating the low-pass filtered signal, and an inverse Park transformation unit for transforming back the regulated signal, and wherein the integrator is configured to integrate the frequency of the unwanted frequency component and to output the result to the Park transformation unit and the inverse Park transformation unit, and wherein the phase shifter is configured to output the phase advancement signal to the inverse Park transformation unit

The frequency analyser, the identifier, and the compensator including compensating units may all be implemented as software modules in a software program e.g. for controlling the operation of the generator.

In a third aspect of the invention, there is provided a wind power system comprising a wind turbine, a generator, a frequency converter arranged to control the torque of the generator, and a controller according to the second aspect.

The steps of (i) obtaining a signal and (iv) compensating for the unwanted frequency components may be performed continuously, whereas the steps of (ii) performing a frequency analysis of the obtained signal and (iii) identifying unwanted frequency components of the obtained signal may be performed repeatedly, such as e.g. more rarely than once a millisecond, once a second, once a minute, once an hour, once every 12 hours, or once every 24 hours.

An advantage is that every harmful frequency can be identified. An advantage is that only harmful vibrations are damped.

A further advantage is that the invention can identify unexpected frequencies, of unknown sources for vibration. It may also identify harmful vibrations occurring over time due to wear, damage or failure of components or unexpected interaction between the different components.

Such additional harmful vibrations may occur due the internal faults of the drive train, such as in a gear box, or internal faults of the generator such as electrical faults of windings, for example short-circuits, or electrical leaking, in a single winding or short-circuits, or electrical leaking, between two windings, or faults of permanent magnets, for example demagnetisation of permanent magnets due to cracks in one or more of the permanent magnets, or cogging due to interaction between the magnets and the stator slots.

A yet further advantage is that the invention provides for performing the compensating without the knowledge of the input-output signals phase relation (i.e. phase relation between the obtained signal and the output signal), thanks to the presence of the phase shift compensation.

In one embodiment, for each unwanted frequency component, the phase shift compensation may be activated after an initial compensation provided by the compensation unit without phase shifting, when the obtained signal has stabilised at a decreased value.

In case the phase difference between the obtained signal and the output signal is disadvantageous it may happen that the obtained signal starts increasing instead of decreasing when the frequency compensating unit starts compensating. Each compensating unit can be provided with means for correcting the direction, or sign, of the output signal. The sign of the output signal can then be changed so that the compensating unit will start to counteract the vibration so that the obtained signal starts decreasing. Additionally, or alternatively, each phase shifter can be provided with means for being activated and inactivated. As an alternative to changing sign of the output signal, the phase shifter can then be activated immediately if the obtained signal increases, instead of decreases, so that the phase of the output reference signal is shifted until the obtained signal decreases. The phase shifter may then be inactivated to let the regulator compensate until the frequency compensating unit has lowered the obtained signal, and the corresponding vibration, to a low and stabilised level. When the obtained signal has decreased and stabilised at a low level, the phase shifter may be activated to compensate for the remaining vibration.

Further, the invention provides the possibility of using different compensating units based on the actual number of frequency components that are to be compensated for, in a dynamic way (compensating units are "born" and "killed" in the software depending on the presence/absence of frequency components to compensate for (.i.e. depending on the amplitudes thereof as compared to the thresholds)).

In one embodiment, the determining of an output signal may comprise high-pass filtering the obtained signal by a high-pass filter, transforming the filtered signal by a Park transformation unit, low-pass filtering the transformed signal by a low-pass filter, regulating the low-pass filtered signal by a regulator, and transforming back the regulated signal by an inverse Park transformation unit.

The unwanted frequency may be integrated and input to the Park transformation unit and the inverse Park transformation unit.

The phase shift may be measured and the output signal may be modified by a phase shifter, whose output is input to the inverse Park transformation unit. The output signal and the obtained signal may be multiplied, and the product may be high-pass filtered and integrated by the phase shifter to generate a phase advancement signal output indicative of the phase shift between the output signal and the obtained signal.

The predefined respective thresholds may be the same for different unwanted frequency components of the obtained signal or may be different for different unwanted frequency components of the obtained signal. In the latter case the thresholds may be set lower or higher for the unwanted low frequency components as compared to unwanted high frequency components.

In one embodiment, the obtained signal of at least one entity as measured in the wind power system is analysed to determine whether the signal is a scalar signal, such as e.g. a speed signal or a torque signal, or a vector signal, such as e.g. a current signal or a voltage signal. If the signal is a scalar signal, the frequency analysis is performed based on the scalar signal and the scalar signal is the obtained signal input in the compensating for the unwanted frequency components, wherein the output signal is a scalar signal. If the signal is a vector signal, the frequency analysis is performed based on one of the components of the vector signal or a scalar signal based on the components of the vector signal, and the vector components of the vector signal are the obtained signal input in the compensating for each of the unwanted frequency components, wherein the output signal is two vector components of a vector signal.

Hereby, the invention provides for the possibility of using any sensor with any valuable information, since the invention can handle both vectors and scalar quantities.

If the obtained signal of at least one entity as measured in the wind power system is a vector signal, the phase shift may, in the compensating for each of the unwanted frequency components, be measured between one of the vector components of the output and obtained signals.

In one embodiment, the method comprises (i) obtaining another signal of at least one entity as measured in the wind power system, the entity being affected by vibrations in the wind power system, (ii) performing a frequency analysis of the obtained another signal, (iii) identifying unwanted frequency components of the obtained another signal having amplitudes above predefined respective thresholds, and (iv) compensating for the unwanted frequency components of the obtained another signal by adjusting the torque of the generator at the frequencies of the unwanted frequency components of the obtained another signal. The compensating for each of the unwanted frequency components of the obtained another signal may comprise : inputting the obtained another signal and the frequency of the unwanted frequency component, determining an output signal based on the obtained another signal and the frequency of the unwanted frequency component, measuring the phase shift between the output signal and the obtained another signal, modifying the output signal based on the measured phase shift between the output signal and the obtained another signal to compensate for the measured phase shift, and using the output signal for adjusting the torque of the generator.

That is, the present invention provides for a plurality of sets of compensating units, one set for each measured entity, wherein the sets of compensating units may be different for different measured entities. Different sets may at each instant have different number of compensating units in operation. The sets of compensating units may, in a dynamic way, be "born" and "killed" in the software depending on the presence/absence of frequency components to compensate for.

One of the obtained signal of at least one entity as measured in the wind power system and the obtained another signal of at least one entity as measured in the wind power system may be a scalar signal, such as e.g. a speed signal or a torque signal, and the other one of the obtained signal of at least one entity as measured in the wind power system and the obtained another signal of at least one entity as measured in the wind power system may be a vector signal, such as e.g. a current signal or a voltage signal.

This may be advantageous since different measured entities may be of different values depending on the nature of the vibrations and the frequency content of the vibrations. For instance, the scalar entity speed may be particularly suitable for low frequency vibrations, whether the vector entity current may be particularly suitable for high frequency vibrations.

In one embodiment, for each of the unwanted frequency components, the contribution provided by the compensating for that unwanted frequency component may be measured or estimated, and the compensating for that unwanted frequency component may be terminated provided that the measured or estimated contribution provided by the compensating for that unwanted frequency component is below a threshold contribution. By such provisions, some compensating units may be terminated in between points of time, at which the frequency analysis of the obtained signal and the identification of unwanted frequency components of the obtained signal are performed. In such manner, it is possible that the number of compensating units in use may drop between the identifications of unwanted frequency components.

The obtained signal may be received from a sensor arranged at a component of the wind power system, such as the wind turbine, a rotor shaft, the tower, a gear box, a generator shaft or the generator.

The generator may be a synchronous generator wherein the compensating includes adjusting the currents fed to the stator of the generator.

Alternatively, the generator may be a doubly-fed induction generator wherein the compensating includes adjusting the currents fed to the rotor of the generator.

The term unwanted or undesired frequencies refer to other frequencies than for example the base or nominal frequency of the generator speed, or the electrical frequency of the currents of the generator.

### Brief Description of the Drawings

The invention is now described, by way of example, with reference to the accompanying drawings, in which:
Fig 1a is a schematic illustration of a first embodiment of a wind power system.
Fig 2 is a schematic illustration of details of a frequency converter in accordance with the invention.
Fig 3 is a schematic illustration of a second embodiment of a wind power system.
Fig 4 is a schematic illustration of a frequency identifier and frequency compensators of the frequency converter of the present invention.
Fig 5 is a schematic flow chart of an embodiment of a method of the present invention.
Fig 6 is a mathematical illustration of a frequency compensating unit provided for compensating for vector quantities.
Fig 7 is a mathematical illustration of a frequency compensating unit provided for compensating for scalar quantities.

### Detailed Description

The invention will now be described more fully hereinafter with reference to the accompanying drawings, in which certain embodiments of the invention are shown. This invention may, however, be embodied in many different forms and should not be construed as limited to the embodiments set forth herein, rather, these embodiments are provided by way of example so that this disclosure will be thorough and complete, and will fully convey the scope of the invention to those skilled in the art. Like numbers refer to like elements throughout the description.

In an embodiment, a frequency converter comprises a converter controller and is adapted to control the torque of the generator by controlling the supply currents to the generator as supplied from the generator side of the frequency converter. In this way the mechanical power transformed from the rotation of the rotor into electrical power by the generator is controlled. The frequency converter is arranged and adapted to control the stator currents and voltages, or the rotor currents and voltages. The frequency converter is also adapted to control the power exiting the frequency converter on the transmission system side. In an embodiment, the frequency converter is controlled by means of pulse width modulation. The electric power exiting on the transmission system side of the frequency converter is controlled in accordance with a main control loop adapting the power supplied by the generator to the desired AC power on the transmission system side. In a second control loop, the frequency converter is adapted to control the generator by counteracting undesired frequencies on the generator side, without affecting the power transferred to the transmission system. Such undesired frequencies may emanate from the mechanical elements at the turbine and drive train or from the electric, magnetic or electromechanical elements of the generator.

In preferred embodiments of a wind power system, a converter controller receives input from a wind turbine controller, which wind turbine controller is arranged and adapted to regulate and control the power production by means of the frequency converter. The wind turbine controller receives input from a transmission system, and from the wind turbine. The wind turbine controller also comprises a control scheme or set of rules for regulating the power production, as supplied to the transmission system, in relation to the available wind speed. Such control schemes may relate an available rotational speed of a rotor to a power amount that should be output to the transmission system. Such a control scheme may alternatively, or additionally, also be incorporated in the converter controller.

In an embodiment, the wind turbine controller handles the main control loop. The wind turbine controller is communicatively connected to the converter controller and supplies power references to the converter controller which is adapted to control the power transferred to the transmission system on the bases of the power references. The power references are references of active power and reactive power, or references of generator torque and reactive power.

The converter controller is adapted to control the power input from the generator and provide a power output to the transmission system also fulfilling a power quality, such as providing the correct amounts of reactive and active power at the transmission system frequency.

In addition to the power control of the main control loop, the converter controller is also adapted to provide a damping or filtering of unwanted frequencies at the generator side, such as torque ripple effects in the generator. For this purpose of providing the second control loop, the frequency converter comprises means for identifying undesired frequencies that, for example, appear as variations in the generator torque and subsequently in the power from the generator as received by the frequency converter. The frequency converter also comprises means for counteracting the undesired frequencies by superimposing compensating frequencies to the currents fed to the generator. In the embodiments, the converter controller comprises a frequency identifier and frequency compensator, which frequency compensator is adapted to create or add a frequency compensating unit for each identified frequency that is to be compensated. The frequency compensator is also adapted to remove or delete a frequency compensating unit for a specific frequency no longer being identified as having an amplitude above a threshold for an unwanted frequency. The converter controller may also be adapted to obtain, or receive, vibration measurements from sensors arranged at the wind turbine or the generator. The vibration measurements are also subjected to a frequency analysis and the vibrations identified by the frequency identifier are counteracted by the frequency compensator, which includes one or more frequency compensating units that provide the control signals for providing vibration compensating currents fed to the generator superimposed on to the current supplied to the generator.

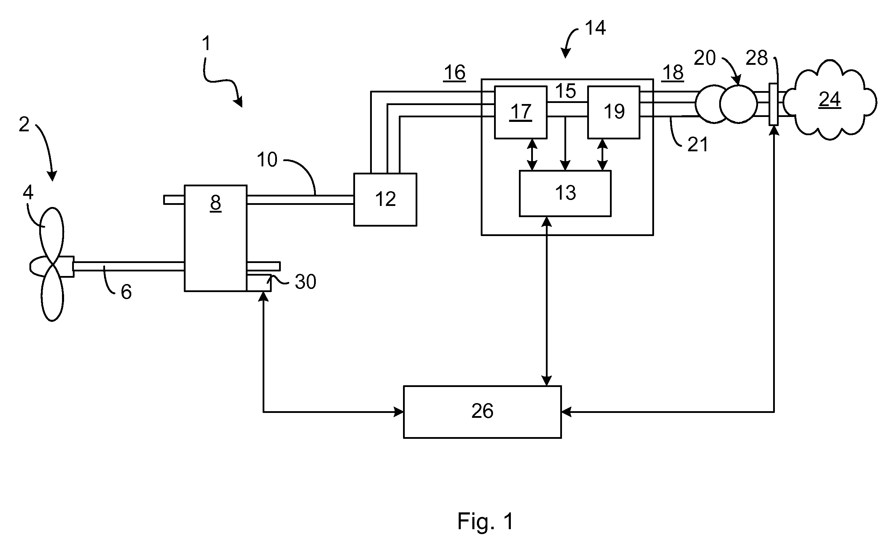

Figure 1 illustrates a first embodiment of a wind power system including a wind turbine frequency converter 14 in accordance with the invention. The wind power system includes a wind turbine 2 comprising a plurality of blades 4, and a turbine shaft 6 arranged for transforming wind into a rotational torque. The turbine shaft is coupled to a gear box 8 which outputs a torque to a generator shaft 10 of a generator 12. In this embodiment, the generator 12 is a synchronous generator 12. The generator 12 is operative to transform the torque into electric power, i.e. into three phase AC power, at a first frequency of the electrical entities of the generator 12, i.e. the currents and voltages. A frequency converter 14 is connected to the three phases of a stator (not illustrated) of the generator 12. The frequency converter 14 is adapted to control the torque of the generator 12 by controlling the currents fed to the generator 12, i.e. to the stator windings (not illustrated) of the generator 12. The frequency converter 14 is also adapted to transform the electric power from the generator, being supplied at a first frequency of the electrical entities, into electric power at a second frequency of the electrical entities, i.e. the frequency of the currents and voltages of a transmission system, which electric power is fed to a transmission line 21 of a transmission system (including the transmission grid 24) at the second frequency. The frequency converter is electrically connected, on a generator side 16, to the generator 12, and is electrically coupled to the transmission grid 24 on a transmission line side 18 of the converter 14, via e.g. a transformer 20. The frequency converter 14 comprises a rotor-side converter 17 connected to the generator 12, the rotor-side converter 17 being arranged at the generator side 16, and a grid-side converter 19 connected to a transmission line 21 and being arranged at the transmission line side 18. The frequency converter 14 also includes a DC bus section 15 that electrically interconnects the rotor-side converter 17 with the grid-side converter 19. The frequency converter 14 also includes a converter controller 13 operatively connected to the rotor-side converter 17 and the grid-side converter 19. The converter controller 13 is adapted to control the rotor-side converter 17 and to control the grid-side converter 19. The converter controller 13 is also connected to measurement devices (not illustrated) for monitoring the rotor-side phase currents and phase voltages, and the DC bus voltage.

The wind power system also includes a wind turbine controller 26 arranged and adapted for controlling the wind turbine 2 and the frequency converter 14. The wind turbine controller 26 is communicatively connected to the wind turbine 2 and receives operation parameters from the wind turbine 2, such as wind turbine speed and wind speed measured for example by a wind speed sensor (not illustrated) of the wind power system. The wind turbine controller 26 is communicatively connected to the transmission system 21, 24, at 28, and receives power production instructions and measurements from the transmission system 21, 24, which enable the wind turbine controller 26 to adjust the wind turbine 2, such as the blade pitch of the wind turbine 2, in accordance with the requirements of a transmission system operator. For this purpose the wind turbine controller 26 is operatively connected to a pitch driver 30 of the wind turbine 2. The wind turbine controller 26 is also communicatively connected to, and adapted to provide instructions to, the frequency converter 14. The converter controller 13 of the frequency converter 14 is adapted to control the power conversion in accordance with the instructions or information from the wind turbine controller 26.

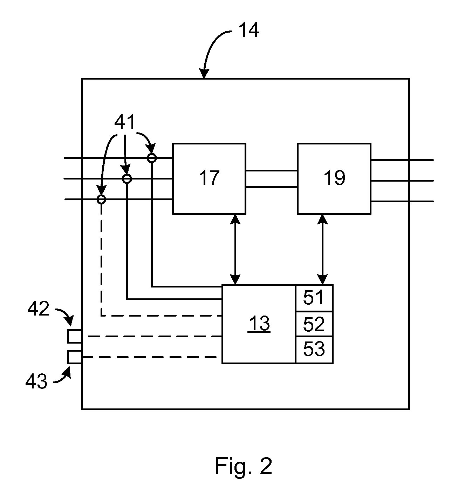

Figure 2 illustrates parts of a frequency converter 14 in more detail. The frequency converter 14 comprises current sensors 41 arranged at the generator conductors that lead to the stator windings of the generator. The frequency converter 14 also comprises a first and a second sensor input contacts 42, 43 for connection to vibration sensors, such as accelerometers, and receiving vibration measurements. The converter controller 13 includes a frequency analyser 51, a frequency identifier 52 and a frequency compensator 53. The frequency analyser 51, the frequency identifier 52 and the frequency compensator 53 are implemented as computer program software added to main control software of the converter controller 13. The current sensors 41 and the sensor inputs 42, 43 are communicatively connected to the converter controller 13, which is adapted to compensate for unwanted frequencies of the signals by means of the frequency analyser 51, the frequency identifier 52 and the frequency compensator 53.

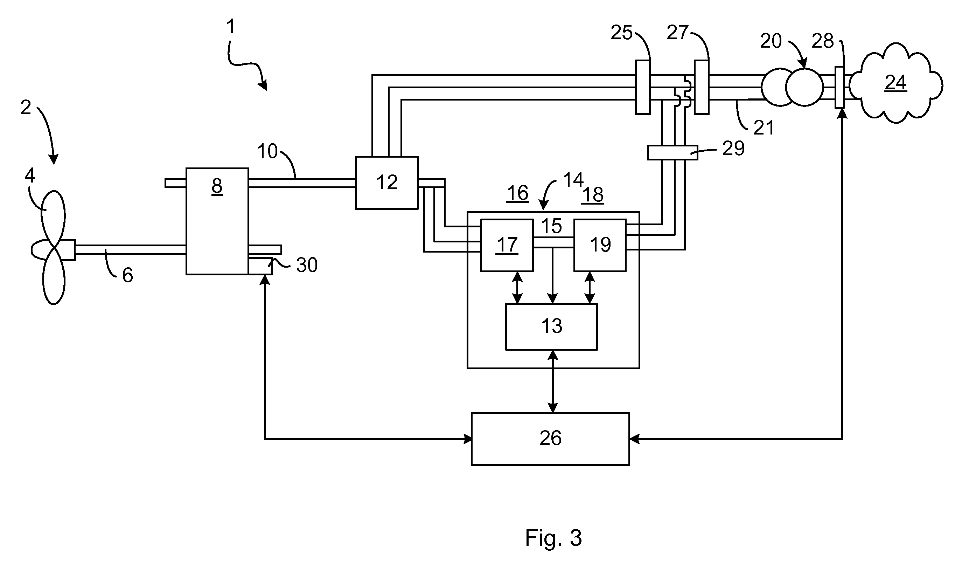

The frequency converter 14 may be adapted for other types of generators, still comprising the frequency analyser 51, the frequency identifier 52 and the frequency compensator 53 of figure 2. Figure 3 illustrates such an embodiment.

Figure 3 illustrates a second embodiment of a wind power system 1 including a wind turbine frequency converter 14. The wind power system is similar to the system of figure 1, however it includes a different kind of generator 12, and a frequency converter 14 adapted for control of such a generator 12.

The wind power system 1 of figure 3 includes a wind turbine 2 comprising a plurality of blades 4, and a turbine shaft 6 arranged for transforming wind into a rotational torque. The turbine shaft 6 is coupled to a gear box 8 which outputs a torque to a generator shaft 10 of a generator 12. In this embodiment, the generator 12 is a doubly-fed induction generator 12. The generator 12 is operative to transform the torque into electric power, i.e. into three phase AC power, at a first frequency of its electrical entities, phase currents and voltages. The frequency converter 14 is connected to the three phases of the rotor (not illustrated) of the generator 12. The stator of the generator 12 is fed from the transmission system 21, 24.

In this embodiment, the frequency converter 14 is adapted to control the torque of the generator 12 by controlling the currents fed to the generator 12, which in this embodiment are the currents fed to the rotor of the generator 12. The frequency converter 14 is also adapted to transform the electric power from the generator 12, being supplied at a first frequency, into electric power at a second frequency, which electric power is fed to a transmission line 21 of a transmission system (including the transmission grid 24) at the second frequency. Similar to the first embodiment, the frequency converter 14 is electrically connected on a generator side 16 to the generator, and is electrically coupled to the transmission grid 24 on a transmission line side 18 of the converter 14, via e.g. a transformer 20. The frequency converter 14 comprises a rotor-side converter 17 connectable to the generator 12 arranged at the generator side 16, and a grid side converter 19 connectable to a transmission line 21 arranged at the transmission line side 18. The frequency converter 14 also includes a DC bus section 15 that electrically interconnects the rotor-side converter 17 with the grid-side converter 19. The frequency converter 14 also includes a converter controller 13 operatively connected to the rotor-side converter 17 and the grid-side converter 19. The converter controller 13 is adapted to control the rotor-side converter 17 and to control the grid-side converter 19. The converter controller 13 is also connected to measurement devices (not illustrated) for monitoring the DC bus voltage, and the rotor-side and grid-side phase currents and phase voltages.

At the transmission line side 18 of the generator 14 in figure 3, the grid-side converter 19, the stator of the generator 12 and the transmission line 21 are connected, such as via circuit breakers at 25, 27 and 29 in figure 2. The frequency converter 14 may be operatively connected to circuit breakers, schematically illustrated at 25, 27, 29 to control the connection of the generator 12 to the transmission system 21, 24, and to control the connection of the frequency converter 14 to the transmission system 21, 24. Such circuit breakers are suitably also provided for the first embodiment of figure 1, although they are not illustrated. The wind turbine controller 26 may also be operatively connected to a circuit breaker 28, and be adapted to control the connection of the wind power system 1 to the transmission system 21, 24.

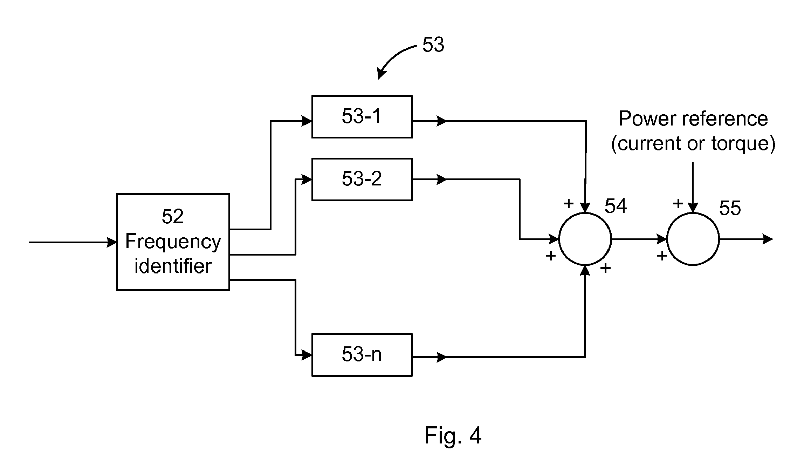

Figure 4 illustrates an implementation of the frequency identifier 52 and the frequency compensator 53. The frequency identifier 52 identifies the undesired frequencies and provides a set of frequencies, f1, f2, ..., fn, and may provide the corresponding amplitude of each frequency as an output. The number of frequencies is recognized and a corresponding number of frequency compensating units 53-1, 53-2, ..., 53-n of the frequency compensator 53 are activated, each frequency compensating unit 53-1, 53-2, ..., 53-n being adapted to compensate the corresponding frequency. The output control signal, of each frequency, from the frequency compensator 53 are added together, at 54, and subsequently added, at 55, to the power reference signal, such as a current or torque reference, for controlling the generator 12.

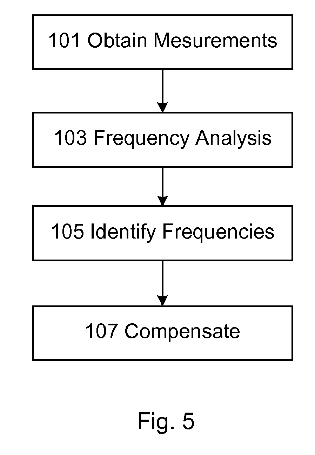

Figure 5 illustrates an embodiment of a method for compensating unwanted frequencies, such as generator torque ripple or vibrations, in a wind power system 1. The method is provided for a wind power system 1 comprising a wind turbine 2 and a generator 12. The method is performed by a frequency converter 14, which frequency converter is arranged to control the torque of the generator 12. The torque is controlled by controlling electrical entities of the generator 12, such as electrical entities of the generator windings, especially controlling the phase voltages or phase currents of the generator 12. The frequency converter 14 is also arranged to receive electrical power at a first frequency of the currents and voltages from the generator 12, and to supply electrical power to a transmission system 21, 24 at a second frequency of the current and voltages. The method comprises obtaining measurements 101 of entities in the wind power system. The measurements may be indicative of torque of the generator, such as the phase currents or phase voltages of the generator conductors. The measurements may be indicative of vibrations of the wind power system 1, such as vibrations obtained at the wind turbine 2, at a tower of the turbine, at a gear box 8 arranged between the wind turbine 2 and the generator 12, or at a turbine shaft 6 or a generator shaft 10, or at the generator 12. Thus the step of obtaining measurements may include receiving inputs from at least one sensor that obtains signals representative of vibrations of the wind power system, which sensor is arranged at a component of the wind power system, such as the blades 4, a rotor shaft 6, the tower, a gear box 8, a generator shaft 10 or the generator 12.

The obtained measurements are subjected to a frequency analysis 103, wherein the frequency converter 14 suitably includes a frequency analyser 51 provided to perform a frequency analysis 103 of the measurements. Preferably, the frequency analysis 103 is performed continuously. The frequency analysis 103 is performed for each of the obtained measurements of the entities, preferably being performed by means of a Fourier transform, such as an FFT (Fast Fourier Transform), or a Sparse Fast Fourier Transform, or alternatively it can be based on the S-transform, or wavelet functions.

The method continues by identifying 105 unwanted frequencies from the measurements by selecting those frequencies that have amplitudes above a predefined respective threshold. Thus, different thresholds may be used for vibrations obtained at different positions of the wind power system, and also a different threshold may be used when identifying unwanted frequencies of the generator currents.

The terms "unwanted" or "undesired" frequencies refer to frequencies other than the main frequency of the electrical currents from the generator.

The method continues by a step of compensating 107 for each of the identified frequencies, by adjusting the torque of the generator at each of the identified frequencies.

The compensation is provided by adjusting the generator torque by means of adjusting the phase currents of the generator 12 by means of providing a compensating control signal at the identified undesired frequencies.

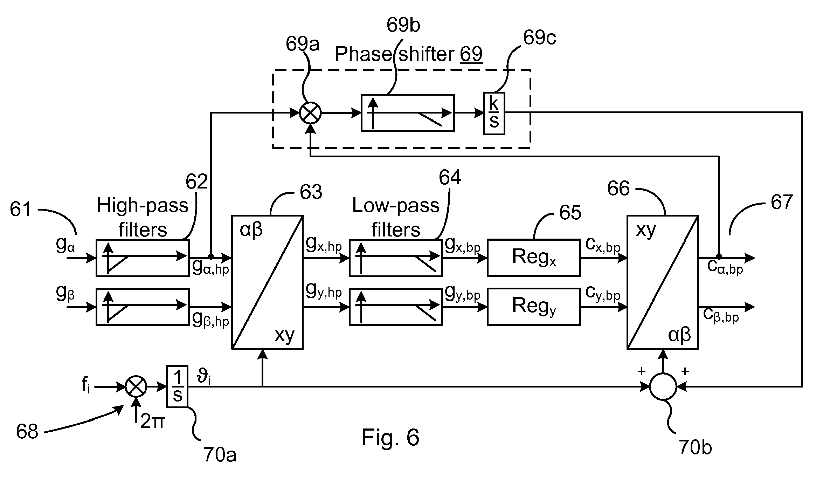

The compensating for each of the identified frequencies may comprise: inputting the obtained signal and the identified frequency, determining an output signal based on the input signal and the identified frequency, measuring the phase shift between the output signal and the input signal, modifying the output signal based on the measured phase shift between the output signal and the input signal to compensate for the measured phase shift, and using the output signal for adjusting the torque of the generator. The phase shifter will be described more closely below with reference to figures 6 and 7.

Figures 6 and 7 illustrate each a respective frequency compensating unit adapted to compensate, at an unwanted frequency, for a vector quantity, such as a generator current, and a scalar quantity, such as a shaft torque, respectively. The frequency compensating units of figures 6 and 7 are similar; however, the vector compensating unit of figure 6 has two inputs and the scalar compensating unit of figure 7 has one input. A frequency compensator of the invention may comprise a plurality of compensating units such as the one of figure 6 or figure 7, one for each unwanted frequency.

Figure 6 illustrates a compensating unit wherein a vector quantity, such as a generator current is to be compensated. The frequency compensating unit is provided with a first and a second input 61 for receiving the vector components g_{α}, g_{β} of the vector. The frequency compensating unit comprises, in sequence, a high-pass filter 62, a Park transformation unit 63, a low-pass filter 64, a regulator 65, an inverse Park transformation unit 66, and an output 67. The frequency compensating unit also comprises an input 68 for the frequency fᵢ that should be compensated for. The high-pass filter 62 is arranged to remove the DC components of the input signals g_{α}, g_{β}. The filtered signals g_{α, hp}, g_{β, hp} are transformed by the Park transformation unit 63, i.e. rotated at the identified frequency fᵢ, into magnitudes g_{x, hp}, g_{y, hp}. The values of the magnitudes g_{x, hp}, g_{y, hp} are filtered by means of the low-pass filter 64, so that other frequencies than the identified frequency fᵢ are removed. The filtered magnitudes g_{x, bp}, g_{y, bp}, containing a DC value, are used as input in the regulator 65. The regulator 65 may be a proportional and integral regulator that provides a first and a second output c_{x, bp}, c_{y, bp}. The filtered magnitudes g_{x, bp}, g_{y, bp} may be regulated so that they decrease towards a zero value, wherein the output values c_{x, bp}, c_{y, bp} approach constant values. The output values c_{x, bp}, c_{y, bp} are transformed back to a stationary reference frame by means of the inverse Park transformation unit 66. The inverse Park transformation unit 66 outputs the vector reference values c_{α, bp}, c_{β, bp}, such as the current compensating values, for the identified frequency fᵢ. The frequency fᵢ is integrated e.g. in the Laplace domain by an integrator (1/s) 70a to form of a phase angle ϑᵢ, which is input to the Park transformation unit 63 and the inverse Park transformation unit 66.

The output signals c_{α, bp}, c_{β, bp} of the identified frequency fᵢ are added by the frequency compensating unit to the control reference signal of the main control loop, and also compensating signals for the other unwanted identified frequencies as provided by other frequency compensating units are added to the control reference signal.

The frequency compensating unit of figure 7 is adapted to compensate for scalar quantities, and includes one input 71 for inputting the scalar to be compensated, such as a torque signal, g_{α}. The frequency compensating unit of figure 7 has a single output 77 for outputting a scalar compensating reference value c_{α, bp} at the frequency of the identified scalar entity. The frequency compensating unit of figure 7 also includes a second input which is set to zero. The scalar frequency compensating unit of figure 7 comprises the same features as the frequency compensating unit of figure 6 and includes in sequence, an input 71, a high-pass filter 72, a Park transformation unit 73, a low-pass filter 74, a regulator 75, an inverse Park transformation unit 76, and an output 77. It also includes_an input 78 for the identified unwanted frequency fᵢ of the scalar entity. The frequency compensating unit of figure 7 is adapted to compensate for scalar quantities by filtering the input scalar g_{α}. by means of the high-pass filter 72, transform the filtered signal g_{a, hp} at the frequency of the identified frequency fᵢ into magnitudes g_{x, bp}, g_{y, bp} and filter them by means of the low-pass filter 74 so that other frequencies than the identified frequency are removed. The filtered magnitudes g_{x, bp}, g_{y, bp} are regulated by means of the regulator 75, which to provide reference constants c_{x, bp}, c_{y, bp}. The scalar frequency compensating unit of figure 7 transforms the regulator's output back to the stationary reference frame by means of the inverse Park transformation unit 76 which outputs a reference signal c_{α, bp} at the identified frequency fᵢ. The frequency fᵢ is integrated e.g. in the Laplace domain by an integrator (1/s) 80a to form a phase angle ϑᵢ, which is input to the Park transformation unit 63 and the inverse Park transformation unit 66.

The output signal c_{α, bp} at the identified frequency fᵢ is added by the frequency compensating unit to the control reference signal of the main control loop, and also compensating signals for the other unwanted identified frequencies as provided by other frequency compensating units are added to the control reference signal.

The purpose of the phase shifter 69; 79 is to compensate for phase differences between the input and output signal, and the phase shifter is provided to adjust the phase of the output reference signal in relation to the phase of the input signal. When compensating for a vibration signal without the phase shifter, the compensator may end at a certain level of vibration, at which level further compensation is not possible. The remaining vibration may not be compensated for due to a phase shift between the input signal and the output reference signal. The phase shifter 69; 79 can then be used to phase shift the output reference signal until it reaches the correct phase with respect to the input signal. For example, when compensating for vibrations or oscillations of a rotor speed signal and compensation is provided by means of varying the torque, the amount of phase shift to be used is determined by the mechanical transfer function between the torque and the speed. This mechanical transfer function may be unknown, and the phase shifter 69; 79 may be used to provide a phase shift automatically.

The phase shifter 69 of figure 6 includes a multiplier 69a for multiplication of one of the high-pass filtered input signals g_{α, hp} and the corresponding output reference signals c_{α, bp}, both on the same axis, the α axis. The phase shifter 79 of figure 7 includes a multiplier 79a for multiplication of the high-pass filtered input signal g_{α, hp} and the output reference signal c_{α, bp}, both on the same axis, the α axis. Each phase shifter 69; 79 includes also a low pass filter 69b; 79b, which filters the result of the multiplication to obtain a measure of its average value. The phase shifter 69; 79 further includes an integrator (k/s) 69b; 79b, wherein the obtained average value is input to generate a phase advancement signal. The phase advancement signal is input to the second transformation unit, i.e. the inverse Park transformation unit 66, 76, respectively, vi a respective adder 70b; 80b to advance the phase angle used in the inverse transformation. When the phase shifter 69 has advanced the phase angle used in the inverse transformation so that the output reference signal has reached the correct phase, the regulated input signal will reach zero amplitude. The product of the multiplication will then be zero and the integrated output of the phase shifter 69; 79 will stabilise at a constant value providing a constant phase shift for the compensating output reference signal c_{α, bp}.

Each phase shifter 69; 79 can suitably be adapted for providing a much slower regulation than the respective regulator 65; 75 of each frequency compensating unit. Also, the phase shifter 69; 79 may be activated after an initial compensation provided by compensating units without phase shifting, when the input signal has stabilised at a decreased value.

In case the phase difference between the input signal and the output reference signal is disadvantageous it may happen that the input signal starts increasing instead of decreasing when the frequency compensating unit starts compensating. The compensating unit can be provided with means for correcting the direction, or sign, of the output reference signal. The sign of the output reference signal can then be changed so that the compensating unit will start to counteract the vibration so that the input signal starts decreasing. Also, the phase shifter can be provided with means for being activated and for being inactivated. As an alternative to changing sign of the output reference signal, the phase shifter can then be activated immediately if the input signal increases, instead of decreases, so that the phase of the output reference signal is shifted until the input signal decreases. The phase shifter may then be inactivated to let the regulator compensate until the frequency compensating unit has lowered the input signal, and the corresponding vibration, to a low and stabilised level. When the input signal has decreased and stabilised at a low level, the phase shifter may be activated again to compensate for the remaining vibration.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for damping vibrations in a wind power system (1) comprising a wind turbine (2), a generator (12), and a frequency converter (14) arranged to control the torque of the generator, the method comprising the steps of:
(i) obtaining a signal of at least one entity as measured (101) in the wind power system, the entity being affected by vibrations in the wind power system,
(ii) performing a frequency analysis (103) of the obtained signal,
(iii) identifying (105) unwanted frequency components of the obtained signal having amplitudes above predefined respective thresholds, and
(iv) compensating (107) for the unwanted frequency components by adjusting the torque of the generator at the frequencies of the unwanted frequency components, wherein the compensating for each of the unwanted frequency components comprises:
- inputting into a compensating unit the obtained signal and the frequency of the unwanted frequency component,
- determining an output signal based on the obtained signal and the frequency of the unwanted frequency component,
- measuring the phase shift between the output signal and the obtained signal,
- modifying the output signal based on the measured phase shift between the output signal and the obtained signal to compensate for the measured phase shift, and
- using the output signal for adjusting the torque of the generator, wherein
- the step of determining an output signal comprises high-pass filtering the obtained signal by a high-pass filter (62), transforming the filtered signal by a Park transformation unit (63), low-pass filtering the transformed signal by a low-pass filter (64), regulating the low-pass filtered signal by a regulator (65), and transforming back the regulated signal by an inverse Park transformation unit (66), and wherein the frequency of the unwanted frequency component is integrated and input to the Park transformation unit and the inverse Park transformation unit.

2. The method according to claim 1, wherein the steps of (i) obtaining a signal and (iv) compensating for the unwanted frequency components are performed continuously.

3. The method according to claim 1 or 2, wherein the steps of (ii) performing a frequency analysis of the obtained signal and (iii) identifying unwanted frequency components of the obtained signal are performed repeatedly, e.g. more rarely than once a millisecond, once a second, once a minute, once an hour, once every 12 hours, or once a every 24 hours.

4. The method according to any of claims 1-3, wherein the phase shift is measured and the output signal is modified by a phase shifter, whose output is input to the inverse Park transformation unit.

5. The method according to claim 4, wherein the output signal and the obtained signal are multiplied, and the product is high-pass filtered, and integrated by the phase shifter to generate a phase advancement signal output.

6. The method according to any of claims 1-5, wherein said predefined respective thresholds are the same for different unwanted frequency components of the obtained signal or are different for different unwanted frequency components of the obtained signal.

7. The method according to any of claims 1-6, wherein the obtained signal of at least one entity as measured in the wind power system is analysed to determine whether the signal is a scalar signal, such as e.g. a speed signal or a torque signal, or a vector signal, such as e.g. a current signal or a voltage signal, and
- if the signal is a scalar signal, the frequency analysis is performed based on the scalar signal and the scalar signal is the obtained signal input to the compensating units for the unwanted frequency components, wherein the output signal is a scalar signal, and
- if the signal is a vector signal, the frequency analysis is performed based on one of the components of the vector signal or a scalar signal based on the components of the vector signal, and the vector components of the vector signal are the obtained signal input to the compensating units for each of the unwanted frequency components, wherein the output signal is two vector components of a vector signal.

8. The method of claim 7, wherein, if the obtained signal of at least one entity as measured in the wind power system is a vector signal, the phase shift is, in the compensating for each of the unwanted frequency components, measured between one of the vector components of the output and obtained signals.

9. The method according to any of claims 1-8, comprising
(i) obtaining another signal of at least one entity as measured in the wind power system, the entity being affected by vibrations in the wind power system,
(ii) performing a frequency analysis of the obtained another signal,
(iii) identifying unwanted frequency components of the obtained another signal having amplitudes above predefined respective thresholds, and
(iv) compensating for the unwanted frequency components of the obtained another signal by adjusting the torque of the generator at the frequencies of the unwanted frequency components of the obtained another signal, wherein the compensating for each of the unwanted frequency components of the obtained another signal comprises:
- inputting into a compensating unit the obtained another signal and the frequency of the unwanted frequency component,
- determining an output signal based on the obtained another signal and the frequency of the unwanted frequency component,
- measuring the phase shift between the output signal and the obtained another signal,
- modifying the output signal based on the measured phase shift between the output signal and the obtained another signal to compensate for the measured phase shift, and
- using the output signal for adjusting the torque of the generator.

10. The method of claim 9, wherein one of the obtained signal of at least one entity as measured in the wind power system and the obtained another signal of at least one entity as measured in the wind power system is a scalar signal, such as e.g. a speed signal or a torque signal, and the other one of the obtained signal of at least one entity as measured in the wind power system and the obtained another signal of at least one entity as measured in the wind power system is a vector signal, such as e.g. a current signal or a voltage signal.

11. The method according to any of claims 1-10, wherein, for each of the unwanted frequency components,
- the contribution provided by the compensating for that unwanted frequency component is measured or estimated, and
- the compensating for that unwanted frequency component is ended provided that the measured or estimated contribution provided by the compensating for that unwanted frequency component is below a threshold contribution.

12. The method according to any of claims 1-11, wherein the method is performed by a frequency converter (14).

13. The method according to any of claims 1-12, wherein the generator (12) is a synchronous generator (12) the step of compensating includes adjusting the currents fed to the stator of the generator (12) or the generator (12) is a doubly-fed induction generator (12) and the step of compensating includes adjusting the currents fed to the rotor of the generator (12).

14. A controller for damping vibrations in a wind power system (1) comprising a wind turbine (2), a generator (12), and a frequency converter (14) arranged to control the torque of the generator, the controller comprising:
(i) an input configured to obtain a signal of at least one entity as measured (101) in the wind power system, the entity being affected by vibrations in the wind power system,
(ii) a frequency analyser configured to perform a frequency analysis (103) of the obtained signal,
(iii) an identifier configured to identify (105) unwanted frequency components of the obtained signal having amplitudes above predefined respective thresholds, and
(iv) a compensator configured to compensate (107) for the unwanted frequency components by adjusting the torque of the generator at the frequencies of the unwanted frequency components, wherein the compensator comprises compensating units, wherein each of the compensating units is configured to compensate for a respective one of the unwanted frequency components, and comprises:
- a compensating unit input configured to receive the obtained signal and the frequency of the unwanted frequency component,
- an analyser configured to determine an output signal based on the obtained signal and the frequency of the unwanted frequency component,
- a phase shifter configured to measure the phase shift between the output signal and the obtained signal and to provide a phase advancement signal, wherein
- the analyser is configured to modify the output signal based on the phase advancement signal, and
- an output operatively connected to the generator configured to output the output signal for adjusting the torque of the generator, wherein
- the analyser of each compensating unit comprises a high-pass filter (62) for high-pass filtering the obtained signal, a Park transformation unit (63) for transforming the filtered signal, a low-pass filter (64) for low-pass filtering the transformed signal, a regulator (65) for regulating the low-pass filtered signal, and an inverse Park transformation unit (66) for transforming back the regulated signal, and wherein the integrator is configured to integrate the frequency of the unwanted frequency component and to output the result to the Park transformation unit and the inverse Park transformation unit, and wherein the phase shifter is configured to output the phase advancement signal to the inverse Park transformation unit.

15. The controller according to claim 14, wherein the input is configured to obtain a signal and the compensator is configured to compensate for the unwanted frequency components continuously, whereas the frequency analyser is configured to perform a frequency analysis of the obtained signal and the identifier is configured to identify unwanted frequency components of the obtained signal repeatedly.

16. The controller according to claim 14 or 15, wherein the controller is a controller of a frequency converter (14).

17. The controller according to any of claims 14-16, wherein the controller is configured to damp vibrations in a wind power system (1) comprising a synchronous generator (12), and the outputs of the compensating units are operatively connected to the stator of the generator to adjust currents fed to the stator of the generator, or comprising a doubly-fed induction generator (12), and the outputs of the compensating units are operatively connected to the rotor of the generator to adjust currents fed to the rotor of the generator.

18. A wind power system comprising a wind turbine (2), a generator (12), a frequency converter (14) arranged to control the torque of the generator, and a controller as claimed in any of claims 14-17.

## Patentansprüche

1. Verfahren zum Dämpfen von Schwingungen in einem Windkraftsystem (1), das eine Windturbine (2), einen Generator (12) und einen Frequenzumsetzer (14), der ausgelegt ist, das Drehmoment des Generators zu steuern, umfasst, wobei das Verfahren die folgenden Schritte umfasst:
(i) Erhalten eines Signals mindestens einer Einheit, das in dem Windkraftsystem gemessen (101) wird, wobei die Einheit durch Schwingungen in dem Windkraftsystem beeinflusst ist,
(ii) Ausführen einer Frequenzanalyse (103) des erhaltenen Signals,
(iii) Identifizieren (105) unerwünschter Frequenzkomponenten des erhaltenen Signals mit Amplituden über vordefinierten jeweiligen Schwellenwerten und
(iv) Kompensieren (107) der unerwünschten Frequenzkomponenten durch Anpassen des Drehmoments des Generators bei den Frequenzen der unerwünschten Frequenzkomponenten, wobei das Kompensieren jeder der unerwünschten Frequenzkomponenten Folgendes umfasst:
- Eingeben des erhaltenen Signals und der Frequenz der unerwünschten Frequenzkomponente in eine Kompensationseinheit,
- Bestimmen eines Ausgangssignals anhand des erhaltenen Signals und der Frequenz der unerwünschten Frequenzkomponente,
- Messen der Phasenverschiebung zwischen dem Ausgangssignal und dem erhaltenen Signal,
- Modifizieren des Ausgangssignals anhand der gemessenen Phasenverschiebung zwischen dem Ausgangssignal und dem erhaltenen Signal, um die gemessene Phasenverschiebung zu kompensieren, und
- Verwenden des Ausgangssignals, um das Drehmoment des Generators anzupassen, wobei
- der Schritt des Bestimmens eines Ausgangssignals umfasst, das erhaltene Signal durch ein Hochpassfilter (62) mit einem Hochpassfilter zu filtern, das gefilterte Signal durch eine Park-Umwandlungseinheit (63) umzuwandeln, das umgewandelte Signal durch ein Tiefpassfilter (64) mit einem Tiefpassfilter zu filtern, das mit einem Tiefpassfilter gefilterte Signal durch einen Regulator (65) zu regulieren und das regulierte Signal durch eine inverse Park-Umwandlungseinheit (66) zurück umzuwandeln und wobei die Frequenz der unerwünschten Frequenzkomponente integriert wird und in die Park-Umwandlungseinheit und die inverse Park-Umwandlungseinheit eingegeben wird.

2. Verfahren nach Anspruch 1, wobei die Schritte des (i) Erhaltens eines Signals und (iv) Kompensierens der unerwünschten Frequenzkomponenten durchgängig ausgeführt werden.

3. Verfahren nach Anspruch 1 oder 2, wobei die Schritte des (ii) Ausführens einer Frequenzanalyse des erhaltenen Signals und des (iii) Identifizierens unerwünschter Frequenzkomponenten des erhaltenen Signals wiederholt, d. h. seltener als einmal pro Millisekunde, einmal pro Sekunde, einmal pro Minute, einmal pro Stunde, einmal alle 12 Stunden oder einmal alle 24 Stunden, ausgeführt werden.

4. Verfahren nach einem der Ansprüche 1-3, wobei die Phasenverschiebung gemessen wird und das Ausgangssignal durch einen Phasenschieber modifiziert wird, dessen Ausgabe in die inverse Park-Umwandlungseinheit eingegeben wird.

5. Verfahren nach Anspruch 4, wobei das Ausgangssignal und das erhaltene Signal multipliziert werden und das Produkt mit einem Hochpassfilter gefiltert wird und durch den Phasenschieber integriert wird, um eine Phasenfortschrittssignalausgabe zu erzeugen.

6. Verfahren nach einem der Ansprüche 1-5, wobei die vordefinierten jeweiligen Schwellenwerte für verschiedene unerwünschte Frequenzkomponenten des erhaltenen Signals dieselben sind oder für verschiedene unerwünschte Frequenzkomponenten des erhaltenen Signals verschieden sind.

7. Verfahren nach einem der Ansprüche 1-6, wobei das erhaltene Signal mindestens einer Einheit, das in dem Windkraftsystem gemessen wird, analysiert wird, um zu bestimmen, ob das Signal ein skalares Signal, wie z. B. ein Geschwindigkeitssignal oder ein Drehmomentsignal, oder ein Vektorsignal, wie z. B. ein Stromsignal oder ein Spannungssignal, ist, und
- dann, wenn das Signal ein skalares Signal ist, die Frequenzanalyse anhand des skalaren Signals ausgeführt wird und das skalare Signal das erhaltene Signal ist, das in die Kompensationseinheiten für die unerwünschten Frequenzkomponenten eingegeben wird, wobei das Ausgangssignal ein skalares Signal ist, und
- dann, wenn das Signal ein Vektorsignal ist, die Frequenzanalyse anhand einer der Komponenten des Vektorsignals oder eines skalaren Signals, das auf den Komponenten des Vektorsignals beruht, ausgeführt wird, und die Vektorkomponenten des Vektorsignals das erhaltene Signal sind, das in die Kompensationseinheiten für jede der unerwünschten Frequenzkomponenten eingegeben wird, wobei das Ausgangssignal zwei Vektorkomponenten eines Vektorsignals sind.

8. Verfahren nach Anspruch 7, wobei dann, wenn das erhaltene Signal mindestens einer Einheit, das in dem Windkraftsystem gemessen wird, ein Vektorsignal ist, die Phasenverschiebung bei dem Kompensieren jeder der unerwünschten Frequenzkomponenten zwischen einer der Vektorkomponenten des Ausgangssignals und des erhaltenen Signals gemessen wird.

9. Verfahren nach einem der Ansprüche 1-8, das Folgendes umfasst:
(i) Erhalten eines weiteren Signals mindestens einer Einheit, das in dem Windkraftsystem gemessen wird, wobei die Einheit durch Schwingungen in dem Windkraftsystem beeinflusst wird,
(ii) Ausführen einer Frequenzanalyse des erhaltenen weiteren Signals,
(iii) Identifizieren unerwünschter Frequenzkomponenten des erhaltenen weiteren Signals mit Amplituden über vordefinierten jeweiligen Schwellenwerten und
(iv) Kompensieren der unerwünschten Frequenzkomponenten des erhaltenen weiteren Signals durch Anpassen des Drehmoments des Generators bei den Frequenzen der unerwünschten Frequenzkomponenten des erhaltenen weiteren Signals, wobei das Kompensieren jeder der unerwünschten Frequenzkomponenten des erhaltenen weiteren Signals Folgendes umfasst:
- Eingeben des erhaltenen weiteren Signals und der Frequenz der unerwünschten Frequenzkomponente in eine Kompensationseinheit,
- Bestimmen eines Ausgangssignals anhand des erhaltenen weiteren Signals und der Frequenz der unerwünschten Frequenzkomponente,
- Messen der Phasenverschiebung zwischen dem Ausgangssignal und dem erhaltenen weiteren Signal,
- Modifizieren des Ausgangssignals anhand der gemessenen Phasenverschiebung zwischen dem Ausgangssignal und dem erhaltenen weiteren Signal, um die gemessene Phasenverschiebung zu kompensieren, und
- Verwenden des Ausgangssignals zum Anpassen des Drehmoments des Generators.

10. Verfahren nach Anspruch 9, wobei das erhaltene Signal mindestens einer Einheit, das in dem Windkraftsystem gemessen wird, oder das erhaltene weitere Signal mindestens einer Einheit, das in dem Windkraftsystem gemessen wird, ein skalares Signal, wie z. B. ein Geschwindigkeitssignal oder ein Drehmomentsignal, ist und das andere des erhaltenen Signals mindestens einer Einheit, das in dem Windkraftsystem gemessen wird, und des erhaltenen weiteren Signals mindestens einer Einheit, das in dem Windkraftsystem gemessen wird, ein Vektorsignal, wie z. B. ein Stromsignal oder ein Spannungssignal, ist.

11. Verfahren nach einem der Ansprüche 1-10, wobei für jede der unerwünschten Frequenzkomponenten
- der durch die Kompensationseinheit gelieferte Beitrag für die unerwünschte Frequenzkomponente gemessen oder geschätzt wird und
- die Kompensation für die unerwünschte Frequenzkomponente beendet wird, vorausgesetzt, dass der durch die Kompensationseinheit für die unerwünschte Frequenzkomponente gelieferte gemessene oder geschätzte Beitrag unter einem Schwellenbeitrag liegt.

12. Verfahren nach einem der Ansprüche 1-11, wobei das Verfahren durch einen Frequenzumsetzer (14) ausgeführt wird.

13. Verfahren nach einem der Ansprüche 1-12, wobei der Generator (12) ein synchroner Generator (12) ist, wobei der Schritt des Kompensierens enthält, die dem Stator des Generators (12) zugeführten Ströme anzupassen, oder der Generator (12) ein doppelt gespeister Induktionsgenerator (12) ist und der Schritt des Kompensierens enthält, die dem Rotor des Generators (12) zugeführten Ströme anzupassen.

14. Steuereinheit zum Dämpfen von Schwingungen in einem Windkraftsystem (1), das eine Windturbine (2), einen Generator (12) und einen Frequenzumsetzer (14), der ausgelegt ist, das Drehmoment des Generators zu steuern, umfasst, wobei die Steuereinheit Folgendes umfasst:
(i) einen Eingang, der konfiguriert ist, ein Signal mindestens einer Einheit, das in dem Windkraftsystem gemessen (101) wird, zu erhalten, wobei die Einheit durch Schwingungen in dem Windkraftsystem beeinflusst wird,
(ii) einen Frequenzanalysator, der konfiguriert ist, eine Frequenzanalyse (103) des erhaltenen Signals auszuführen,
(iii) eine Identifiziereinrichtung, die konfiguriert ist, unerwünschte Frequenzkomponenten des erhaltenen Signals mit Amplituden über vordefinierten jeweiligen Schwellenwerten zu identifizieren (105), und
(iv) einen Kompensator, der konfiguriert ist, die unerwünschten Frequenzkomponenten durch Anpassen des Drehmoments des Generators bei den Frequenzen der unerwünschten Frequenzkomponenten zu kompensieren (107), wobei der Kompensator Kompensationseinheiten umfasst, wobei jede der Kompensationseinheiten konfiguriert ist, eine jeweilige der unerwünschten Frequenzkomponenten zu kompensieren, und Folgendes umfasst:
- einen Kompensationseinheitseingang, der konfiguriert ist, das erhaltene Signal und die Frequenz der unerwünschten Frequenzkomponente zu erhalten,
- einen Analysator, der konfiguriert ist, ein Ausgangssignal anhand des erhaltenen Signals und der Frequenz der unerwünschten Frequenzkomponente zu bestimmen,
- einen Phasenschieber, der konfiguriert ist, die Phasenverschiebung zwischen dem Ausgangssignal und dem erhaltenen Signal zu messen und ein Phasenfortschrittssignal zu liefern, wobei
- der Analysator konfiguriert ist, das Ausgangssignal anhand des Phasenfortschrittssignals zu modifizieren, und
- einen Ausgang, der mit dem Generator betriebstechnisch verbunden ist und konfiguriert ist, das Ausgangssignal zum Anpassen des Drehmoments des Generators auszugeben, wobei
- der Analysator jeder Kompensationseinheit ein Hochpassfilter (62) zum Filtern mit einem Hochpassfilter des erhaltenen Signals, eine Park-Umwandlungseinheit (63) zum Umwandeln des gefilterten Signals, ein Tiefpassfilter (64) zum Filtern mit einem Tiefpassfilter des umgewandelten Signals, einen Regulator (65) zum Regulieren des mit einem Tiefpassfilter gefilterten Signals und eine inverse Park-Umwandlungseinheit (66) zum Rückumwandeln des regulierten Signals umfasst und wobei der Integrator konfiguriert ist, die Frequenz der unerwünschten Frequenzkomponente zu integrieren und das Ergebnis an die Park-Umwandlungseinheit und die inverse Parkumwandlungseinheit auszugeben, und wobei der Phasenschieber konfiguriert ist, das Phasenfortschrittssignal an die inverse Park-Umwandlungseinheit auszugeben.

15. Steuereinheit nach Anspruch 14, wobei der Eingang konfiguriert ist, ein Signal zu erhalten, und der Kompensator konfiguriert ist, die unerwünschten Frequenzkomponenten durchgängig zu kompensieren, während der Frequenzanalysator konfiguriert ist, eine Frequenzanalyse des erhaltenen Signals auszuführen, und die Identifiziereinrichtung konfiguriert ist, unerwünschte Frequenzkomponenten des erhaltenen Signals wiederholt zu identifizieren.

16. Steuereinheit nach Anspruch 14 oder 15, wobei die Steuereinheit eine Steuereinheit eines Frequenzumsetzers (14) ist.

17. Steuereinheit nach einem der Ansprüche 14-16, wobei die Steuereinheit konfiguriert ist, Schwingungen in einem Windkraftsystem (1) zu dämpfen, das einen synchronen Generator (12) umfasst und wobei die Ausgänge der Kompensationseinheiten mit dem Stator des Generators betriebsfähig verbunden sind, um die dem Stator des Generators zugeführten Ströme anzupassen, oder einen doppelt gespeisten Induktionsgenerator (12) umfasst und wobei die Ausgänge der Kompensationseinheiten mit dem Rotor des Generators betriebsfähig verbunden sind, um die dem Rotor des Generators zugeführten Ströme anzupassen.

18. Windkraftsystem, das eine Windturbine (2), einen Generator (12), einen Frequenzumsetzer (14), der ausgelegt ist, das Drehmoment des Generators zu steuern, und eine Steuereinheit nach einem der Ansprüche 14-17 umfasst.

## Revendications

1. Procédé d'amortissement de vibrations dans un système (1) à énergie éolienne comportant une éolienne (2), une génératrice (12), et un convertisseur (14) de fréquence disposé pour commander le couple de la génératrice, le procédé comportant les étapes consistant à : (i) obtenir un signal d'au moins une entité telle que mesurée (101) dans le système à énergie éolienne, l'entité étant affectée par des vibrations dans le système à énergie éolienne, (ii) effectuer une analyse de fréquence (103) du signal obtenu, (iii) identifier (105) des composantes de fréquences indésirables du signal obtenu dont les amplitudes dépassent des seuils respectifs prédéfinis, et (iv) compenser (107) l'effet des composantes de fréquences indésirables en réglant le couple de la génératrice aux fréquences des composantes de fréquences indésirables, la compensation de l'effet de chacune des composantes de fréquences indésirables comportant les étapes consistant à :
- introduire dans une unité de compensation le signal obtenu et la fréquence de la composante de fréquence indésirable,
- déterminer un signal de sortie d'après le signal obtenu et la fréquence de la composante de fréquence indésirable,
- mesurer le déphasage entre le signal de sortie et le signal obtenu,
- modifier le signal de sortie d'après le déphasage mesuré entre le signal de sortie et le signal obtenu pour compenser l'effet du déphasage mesuré, et
- utiliser le signal de sortie pour régler le couple de la génératrice,
- l'étape de détermination d'un signal de sortie comportant les actions consistant à faire appliquer un filtrage passe-haut au signal obtenu par un filtre passe-haut (62), à faire transformer le signal filtré par une unité (63) de transformation de Park, à faire appliquer un filtrage passe-bas au signal transformé par un filtre passe-bas (64), faire réguler le signal issu du filtrage passe-bas par un régulateur (65) et faire retransformer le signal régulé par une unité (66) de transformation de Park inverse, et la fréquence de la composante de fréquence indésirable étant intégrée et introduite dans l'unité de transformation de Park et l'unité de transformation de Park inverse.

2. Procédé selon la revendication 1, les étapes consistant à (i) obtenir un signal et (iv) compenser l'effet des composantes de fréquences indésirables étant réalisées de manière continue.

3. Procédé selon la revendication 1 ou 2, les étapes consistant à (ii) effectuer une analyse de fréquence du signal obtenu et (iii) identifier des composantes de fréquences indésirables du signal obtenu étant réalisées de manière répétée, par ex. plus rarement qu'une fois par milliseconde, une fois par second, une fois par minute, une fois par heure, toutes les 12 heures ou toutes les 24 heures.

4. Procédé selon l'une quelconque des revendications 1 à 3, le déphasage étant mesuré et le signal de sortie étant modifié par un déphaseur, dont la sortie est introduite dans l'unité de transformation de Park inverse.

5. Procédé selon la revendication 4, le signal de sortie et le signal obtenu étant multipliés et le produit faisant l'objet d'un filtrage passe-haut et étant intégré par le déphaseur pour générer une sortie de signal d'avance de phase.

6. Procédé selon l'une quelconque des revendications 1 à 5, lesdits seuils respectifs prédéfinis étant les mêmes pour des composantes différentes de fréquences indésirables du signal obtenu ou étant différents pour des composantes différentes de fréquences indésirables du signal obtenu.

7. Procédé selon l'une quelconque des revendications 1 à 6, le signal obtenu d'au moins une entité telle que mesurée dans le système à énergie éolienne étant analysé pour déterminer si le signal est un signal scalaire, comme par ex. un signal de vitesse ou un signal de couple, ou un signal vectoriel, comme par ex. un signal de courant ou un signal de tension, et
- si le signal est un signal scalaire, l'analyse de fréquence étant effectuée d'après le signal scalaire et le signal scalaire étant le signal obtenu introduit dans les unités de compensation pour les composantes de fréquences indésirables, le signal de sortie étant un signal scalaire, et
- si le signal est un signal vectoriel, l'analyse de fréquence étant effectuée d'après une des composantes du signal vectoriel ou un signal scalaire basé sur les composantes du signal vectoriel, et les composantes vectorielles du signal vectoriel étant le signal obtenu introduit dans les unités de compensation pour chacune des composantes de fréquences indésirables, le signal de sortie constituant deux composantes vectorielles d'un signal vectoriel.

8. Procédé selon la revendication 7, **caractérisé en ce que**, si le signal obtenu d'au moins une entité telle que mesurée dans le système à énergie éolienne est un signal vectoriel, le déphasage est, lors de la compensation de l'effet de chacune des composantes de fréquences indésirables, mesuré entre une des composantes vectorielles de la sortie et des signaux obtenus.

9. Procédé selon l'une quelconque des revendications 1 à 8, comportant les étapes consistant à
(i) obtenir un autre signal d'au moins une entité telle que mesurée dans le système à énergie éolienne, l'entité étant affectée par des vibrations dans le système à énergie éolienne,
(ii) effectuer une analyse de fréquence de l'autre signal obtenu,
(iii) identifier des composantes de fréquences indésirables de l'autre signal obtenu dont les amplitudes dépassent des seuils respectifs prédéfinis, et
(iv) compenser l'effet des composantes de fréquences indésirables de l'autre signal obtenu en réglant le couple de la génératrice aux fréquences des composantes de fréquences indésirables de l'autre signal obtenu, la compensation de l'effet de chacune des composantes de fréquences indésirables de l'autre signal obtenu comportant les étapes consistant à :
- introduire dans une unité de compensation l'autre signal obtenu et la fréquence de la composante de fréquence indésirable,
- déterminer un signal de sortie d'après l'autre signal obtenu et la fréquence de la composante de fréquence indésirable,
- mesurer le déphasage entre le signal de sortie et l'autre signal obtenu,
- modifier le signal de sortie d'après le déphasage mesuré entre le signal de sortie et l'autre signal obtenu pour compenser l'effet du déphasage mesuré, et
- utiliser le signal de sortie pour régler le couple de la génératrice.

10. Procédé selon la revendication 9, un signal parmi le signal obtenu d'au moins une entité telle que mesurée dans le système à énergie éolienne et l'autre signal obtenu d'au moins une entité telle que mesurée dans le système à énergie éolienne étant un signal scalaire, comme par ex. un signal de vitesse ou un signal de couple, et l'autre signal parmi le signal obtenu d'au moins une entité telle que mesurée dans le système à énergie éolienne et l'autre signal obtenu d'au moins une entité telle que mesurée dans le système à énergie éolienne étant un signal vectoriel, comme par ex. un signal de courant ou un signal de tension.

11. Procédé selon l'une quelconque des revendications 1 à 10, **caractérisé en ce que**, pour chacune des composantes de fréquences indésirables,
- la contribution apportée par la compensation de l'effet de la composante de fréquence indésirable en question est mesurée ou estimée, et
- il est mis fin à la compensation de l'effet de la composante de fréquence indésirable en question à condition que la contribution mesurée ou estimée apportée par la compensation de l'effet de la composante de fréquence indésirable en question soit inférieure à une contribution seuil.

12. Procédé selon l'une quelconque des revendications 1 à 11, le procédé étant réalisé par un convertisseur (14) de fréquence.

13. Procédé selon l'une quelconque des revendications 1 à 12, la génératrice (12) étant une génératrice synchrone (12), l'étape de compensation comprenant le réglage des courants introduits dans le stator de la génératrice (12), ou la génératrice (12) étant une génératrice asynchrone (12) à double alimentation et l'étape de compensation comprenant le réglage des courants introduits dans le rotor de la génératrice (12).

14. Commande servant à amortir des vibrations dans un système (1) à énergie éolienne comportant une éolienne (2), une génératrice (12) et un convertisseur (14) de fréquence disposé pour commander le couple de la génératrice, la commande comportant :
(i) une entrée configurée pour obtenir un signal d'au moins une entité telle que mesurée (101) dans le système à énergie éolienne, l'entité étant affectée par des vibrations dans le système à énergie éolienne,
(ii) un analyseur de fréquence configuré pour effectuer une analyse de fréquence (103) du signal obtenu,
(iii) un identificateur configuré pour identifier (105) des composantes de fréquences indésirables du signal obtenu dont les amplitudes dépassent des seuils respectifs prédéfinis, et
(iv) un compensateur configuré pour compenser (107) l'effet des composantes de fréquences indésirables en réglant le couple de la génératrice aux fréquences des composantes de fréquences indésirables, le compensateur comportant des unités de compensation, chacune des unités de compensation étant configurée pour compenser l'effet d'une composante respective parmi les composantes de fréquences indésirables, et comportant :
- une entrée d'unité de compensation configurée pour recevoir le signal obtenu et la fréquence de la composante de fréquence indésirable,
- un analyseur configuré pour déterminer un signal de sortie d'après le signal obtenu et la fréquence de la composante de fréquence indésirable,
- un déphaseur configuré pour mesurer le déphasage entre le signal de sortie et le signal obtenu et pour fournir un signal d'avance de phase,
- l'analyseur étant configuré pour modifier le signal de sortie d'après le signal d'avance de phase, et
- une sortie reliée fonctionnellement à la génératrice, configurée pour délivrer le signal de sortie servant à régler le couple de la génératrice,
- l'analyseur de chaque unité de compensation comportant un filtre passe-haut (62) servant à appliquer un filtrage passe-haut au signal obtenu, une unité (63) de transformation de Park servant à transformer le signal filtré, un filtre passe-bas (64) servant à appliquer un filtrage passe-bas au signal transformé, un régulateur (65) servant à réguler le signal issu du filtrage passe-bas, et une unité (66) de transformation de Park inverse servant à retransformer le signal régulé, et l'intégrateur étant configuré pour intégrer la fréquence de la composante de fréquence indésirable et pour délivrer le résultat à l'unité de transformation de Park et à l'unité de transformation de Park inverse, et le déphaseur étant configuré pour délivrer le signal d'avance de phase à l'unité de transformation de Park inverse.

15. Commande selon la revendication 14, l'entrée étant configurée pour obtenir un signal et le compensateur étant configuré pour compenser l'effet des composantes de fréquences indésirables de manière continue, alors que l'analyseur de fréquence est configuré pour effectuer une analyse de fréquence du signal obtenu et l'identificateur est configuré pour identifier de manière répétée des composantes de fréquences indésirables du signal obtenu.

16. Commande selon la revendication 14 ou 15, la commande étant une commande d'un convertisseur (14) de fréquence.

17. Commande selon l'une quelconque des revendications 14 à 16, la commande étant configurée pour amortir des vibrations dans un système (1) à énergie éolienne comportant une génératrice synchrone (12), et les sorties des unités de compensation étant reliées fonctionnellement au stator de la génératrice pour régler des courants introduits dans le stator de la génératrice, ou comportant une génératrice asynchrone (12) à double alimentation, et les sorties des unités de compensation étant reliées fonctionnellement au rotor de la génératrice pour régler des courants introduits dans le rotor de la génératrice.

18. Système à énergie éolienne comportant une éolienne (2), une génératrice (12), un convertisseur (14) de fréquence disposé pour commander le couple de la génératrice, et une commande selon l'une quelconque des revendications 14 à 17.
